# EUROPÄISCHE PATENTSCHRIFT

(11) **EP 1 728 670 B1**
(45) Veröffentlichungstag und Bekanntmachung des Hinweises auf die Patenterteilung: **28.05.2008**
(21) Anmeldenummer: 06011012.9
(22) Anmeldetag: 29.05.2006
(51) Int. Cl.: B60K 17/04

(54) **Aussenplanetenachse für Kraftfahrzeuge**
Planetary hub reduction axle for motor vehicles
Pont planétaire pour véhicules

(30) Priorität: 02.06.2005 DE 102005025252
(43) Veröffentlichungstag der Anmeldung: 06.12.2006
(73) Patentinhaber: MAN Nutzfahrzeuge Aktiengesellschaft, 80976 München (DE)
(72) Erfinder: Landsherr, Thomas, Dipl.-Ing., 80995 München (DE)

(56) Entgegenhaltungen:
- EP-A- 0 219 683
- DE-A1- 1 430 702
- DE-A1- 10 338 659
- DE-A1- 19 631 479

## Beschreibung

Die Erfindung betrifft eine Außenplanetenachse für ein Kraftfahrzeug mit außenseitig angeordneten Planetengetrieben, welche zumindest ein angetriebenes Sonnenrad und in einem Hohlrad umlaufende Planetenräder aufweisen, wobei Planetenbolzen zur Lagerung der Planetenräder mit einem Deckelabschnitt einer Glockennabe verbunden sind, und wobei sich die Glockennabe vom Deckelabschnitt topfförmig in einen Mantelabschnitt erstreckt, welcher endseitig mit einer Radnabe verbunden ist.

Derartige Außenplanetenachsen werden als angetriebene Achsen bei Nutzfahrzeugen wie Lastkraftwagen oder Bussen eingesetzt. Das Antriebsmoment zum Antrieb der Räder wird mittels eines Triebstranges vom Motor an ein achsinternes Ausgleichsgetriebe abgegeben, durch welches das Antriebsmoment über Hinterachswellen an die Planetengetriebe übertragen wird. Hierbei umfasst eine Außenplanetenachse zwei Planetengetriebe, welche außenseitig in der Antriebsachse angeordnet sind. Die Planetengetriebe dienen als Getriebestufe zur Herabsetzung der Antriebsdrehzahl, um an der Radnabe die für den Betrieb des Fahrzeugs erforderliche Raddrehzahl mit einem entsprechend hohen Drehmoment zu schaffen.

Aus der gattungsgemäßen DE 196 31 479 A1 ist eine Außenplanetenachse für Kraftfahrzeuge bekannt, wobei diese ein mit einem an einem Fahrzeugantrieb angeschlossenen Ausgleichsgetriebe und von diesem über Hinterachswellen angetriebene, an Radnaben angeordnete Planetengetriebe aufweist. Derartige Außenplanetenachsen erfordern einen kostenintensiven Fertigungsaufwand und die Planetengetriebe dieser Außenplanetenachsen weisen eine relativ hohe Geräuschentwicklung auf. Die in dieser Druckschrift beschriebenen Planetengetriebe weisen schräg verzahnte Sonnenräder mit zueinander gegensinnig gerichteter Schrägungsrichtung auf, und die axiale Abstützung der Sonnenräder ist radnabenseitig durch sich an den Radnaben abstützende Lager und ausgleichsgetriebeseitig durch mit den Sonnenrädern verbundene, sich im Zentralbereich des Ausgleichsgetriebes abstützende Hinterachswellen gegeben.

Ein Problem beim Betrieb einer Außenplanetenachse muss in der erheblichen Geräuschentwicklung gesehen werden. Da insbesondere bei mehrachsigen Antriebsaggregaten mehrere Glockennaben der Außenplanetenachsen im Außenbereich des Fahrzeugs angeordnet sind, summieren sich in diesem Fall sogar die Einzelemissionen.

Dieses Problem kann durch eine Schrägverzahnung in der Planetenverzahnung gelöst werden, wobei eine derartige Reduktion der entstehenden Geräusche nicht grundsätzlich mit Erfolg verbunden ist. Hinzu kommt, dass eine Schrägverzahnung eine axial ausgebildete Kraftkomponente in den Radwellen der Verzahnung hervorruft, welche aufwendig durch Axiallagerungen abgestützt bzw. aufgenommen werden muss. Hierdurch entstehen zusätzliche Kosten für Fertigung und Montage.

Die Planetengetriebe umfassen, wie allgemein bekannt, ein innen liegendes Sonnenrad, welches über eine Hinterachswelle angetrieben ist. Die um das Sonnenrad angeordneten Planetenräder sind auf Planetenbolzen gelagert, wobei die Planetenbolzen im Deckelabschnitt der Glockennabe und im Planetenträger aufgenommen sind. Entstehende Schwingungen im Planetengetriebe werden daher direkt an die Glockennabe übertragen, sodass sich in der Glockennabe insbesondere bei einer Resonanzbildung, d.h. bei einer Anregungskreisfrequenz im Nahbereich der Eigenkreisfrequenz des Glockennabenkörpers, Schwingungsfelder bilden. Dies wird durch die lange und dünne Bauform und die hohe Torsionsbelastung der Glockennabe zusätzlich begünstigt. Jedoch ist die Glockennabe in ihrer Form im Wesentlichen vorgegeben, da sich die Radlagerung wegen der Krafteinleitung in der Regel unterhalb der Raddrucklinie befinden muss. Bei bestimmten Drehzahlen und zu übertragenden Antriebsmomenten der Fahrzeugräder kann es an der Glockennabe zu einer Ausbildung von Schwingungen kommen, welche zu den genannten Geräuschemissionen führen.

Es ist daher die Aufgabe der vorliegenden Erfindung, eine Außenplanetenachse für ein Kraftfahrzeug zu schaffen, bei der die Probleme des Standes der Technik vermeidbar sind und insbesondere auf eine konstruktiv einfache und wirtschaftliche Weise die Emission von Geräuschen beim Betrieb der Außenplanetenachse vermieden werden können.

Diese Aufgabe wird erfindungsgemäß durch eine Außenplanetenachse für ein Kraftfahrzeug mit den Merkmalen des Patentanspruchs 1 gelöst. Vorteilhafte Weiterbildungen der Erfindung sind in den abhängigen Ansprüchen angegeben.

Die Erfindung schließt die technische Lehre ein, dass die Glockennabe im Mantelabschnitt eine sich in Umfangsrichtung ändernde Wanddicke aufweist, um eine im Betrieb der Außenplanetenachse durch Schwingungen im Mantelabschnitt hervorgerufene Geräuschentwicklung zumindest zu reduzieren.

Diese Lösung bietet den Vorteil, dass durch die sich ändernde Wanddicke eine flächige Ausbildung von Schwingungsfeldern im Mantelabschnitt der Glockennabe verhindert oder sogar vermieden werden kann. Die Wanddicke und damit die flächenspezifische Masse der Mantelfläche stellt eine physikalische Größe zur Bestimmung von Eigenfrequenzen von flächig ausgebildeten Festkörpern dar. Wenn diese physikalische Größe innerhalb der schwingungsfähigen Fläche jedoch aufgrund einer unterschiedlichen Dicke der Wandung nicht konstant ist, ist damit die Ausbildung von Flächen im Mantelabschnitt, welche bei einer bestimmten Frequenz zumindest eine Partialschwingung ausführen, nicht oder nur vermindert gegeben. Die Eigenkreisfrequenz ist somit eine wanddickenabhängige Größe, welche bei einer lokal im Bauteil veränderlichen Wanddicke ebenfalls eine sich lokal ändernde Größe darstellt. Wenn einerseits die Drehzahl der Außenplanetenachse variiert und sich andererseits die Torsionsbelastung in der Glockennabe aufgrund eines sich ändernden Antriebsdrehmoments ändert, kann für keinen zu separierenden Betriebspunkt aus Drehzahl und Drehmoment eine flächige Schwingungsausbildung im Mantelabschnitt der Glockennabe entstehen. Auf diese Weise wird eine Geräuschentwicklung zumindest weitgehend vermieden. Die sich ändernde Wanddicke kann sich dabei ebenfalls in den Deckelabschnitt der Glockennabe erstrecken, sodass auch in diesem Bauteilbereich der Glockennabe eventuelle Schwingungen unterdrückbar sind. Die Änderung der Wanddicke ist nicht auf die Umfangsrichtung beschränkt, es kann ebenfalls eine irreguläre, nicht richtungsabhängige Wanddickenänderung zur Schwingungsunterdrückung ausgebildet werden. Dabei kann es jedoch zu Einschränkungen kommen, wenn die Glockennabe im Urformverfahren hergestellt wird, wobei insbesondere die Entformbarkeit des Bauteils aus einer Dauerform zu beachten ist. Eine weitere Möglichkeit der Wanddickenänderung kann darin bestehen, eine gleichförmige, zylindrische Innenkontur der Glockennabe zu schaffen, und die Wanddickenänderung über eine ungleichförmige Außenkontur zu erzeugen. Diese technische Lösung hat allerdings gegenüber einem Wellenprofil auf der Innenseite der Glockennabe den Nachteil, dass das übertragbare Moment, aufgrund einer verringerten Steifigkeit bei vergleichbarer Baugröße, kleiner ist.

Eine weitere die Erfindung verbessernde Maßnahme sieht vor, dass der Mantelabschnitt der Glockennabe eine gleichförmige und im Wesentlichen zylindrische Außenseite aufweist und die sich ändernde Wanddicke in einer Wellenform in der Innenseite der Glockennabe ausgebildet ist. Vorteilhafterweise weist damit eine wellenförmige Oberfläche keine gleichen Wanddicken in zueinander benachbarten Flächenbereichen auf, da die Wanddicke sich kontinuierlich ändert. Die kontinuierliche Änderung unterbricht die Schwingungsfelder und die Geräuschentwicklung kann unterbunden werden, da unabhängig von den Parametern der Schwingungsanregung wie beispielsweise der Drehzahl der Glockennabe bzw. der Komponenten im Planetengetriebe kein flächiger Wanddickenbereich im Mantelabschnitt eine Eigenkreisfrequenz aufweist, auf welche eine Schwingungsanregung übertragbar ist.

Vorteilhafterweise ist die Wellenform im Wesentlichen gleichförmig in Längsrichtung der Außenplanetenachse ausgebildet ist, sodass der Mantelabschnitt ein sich in Längsrichtung nicht änderndes Querschnittsprofil aufweist. Damit wird eine Entformbarkeit der Glockennabe geschaffen, welche in einem Gießprozess eine Trennung des Bauteils aus der Dauerform ermöglicht. Die Wellenform ist durch den unveränderten Querschnitt in Längsrichtung der Glockennabe gleichförmig, sodass sich jede Einzelwellenform in der Innenoberfläche des Mantelabschnittes ohne Formänderung von der an den Deckelabschnitt angrenzenden Endseite bis zur an den Flanschabschnitt angrenzenden Endseite des Mantelabschnittes gleichmäßig erstreckt. Flanschabschnittseitig kann die Wellenform vor der Endfläche des Flansches enden und in einen nutartigen Freistich übergehen, um ein Fügen der Glockennabe auf die Radnabe zu ermöglichen und die Einsetzbarkeit eines Dichtelementes zu schaffen.

Nach einer möglichen Weiterbildung der Erfindung wird vorgeschlagen, dass der Mantelabschnitt der Glockennabe über dem Umfang ≥ 6 und ≤ 25, bevorzugt ≥ 10 und ≤ 15 und besonders bevorzugt 12 Wellenabschnitte aufweist. Entsprechend dem Durchmesser der Glockennabe ist die Ausbildung von 12 Wellenabschnitten besonders vorteilhaft, sodass eine hinreichend große Änderung der Wanddicke pro Strecke in Umfangsrichtung erzielbar ist, um eine Schwingungsausbildung und damit eine Geräuschentwicklung zu verhindern. Bei einer weiteren Erhöhung der Anzahl der Wellenabschnitte werden die einzelnen Wellenabschnitte jedoch kleiner und die Schwingungsfähigkeit der Glockennabe im Matelabschnitt kann wieder zunehmen, da die sich periodisch wiederholenden Wellenformen Partialschwingungen zueinander ausführen können, wohingegen bei einer zu geringen Anzahl der Wellenabschnitte die streckenbezogene Wanddickenänderung im Mantelabschnitt zur Schwingungsunterdrückung nicht hinreichend ist.

Eine vorteilhafte Ausgestaltung der Wellenform sieht vor, dass die Wellenform auf der Innenseite des Mantelabschnittes sinusförmig ausgebildet ist. Durch eine sinusförmige Wellenform entstehen keine sprunghaften Wanddickenänderungen im Mantelabschnitt und es bildet sich eine Kontur mit ausschließlich kontinuierlichen Übergängen aus. Dies ist vor dem Hintergrund der erheblichen Torsionsbelastung der Glockennabe vorteilhaft, da keine Kerbwirkungen entstehen können und die mechanische Spannungsverteilung im Mantelabschnitt weist keine Spannungsspitzen auf. Ebenso sind weitere Ausbildungsformen einer Kontur möglich, welche nicht einer harmonischen Schwingungsform entsprechen, sodass beispielsweise rippenartig angeformte Versteifungsstrukturen auf der Innen- und/oder Außenseite des Mantelabschnittes ausgebildet sind, die ebenfalls zu einer Schwingungsunterdrückung und damit zu einer reduzierten Geräuschemission führen.

Ein weiterer Vorteil der Erfindung wird dadurch erreicht, dass die Wanddicke des Mantelabschnittes einen minimalen Wert von 5 mm und einen maximalen Wert von 8,5 mm aufweist. Der angegebene Wertebereich lässt eine hinreichende Festigkeit des Mantelabschnittes zu, so dass die Struktur der Glockennabe nicht zu stark geschwächt wird und diese der erheblichen Torsionsbelastung standhalten kann. Andererseits ist die Wanddicke auf einen Maximalwert begrenzt, da eine zu große nach innen ausgebildete Wanddicke den erforderlichen Bauraum der innenliegend angeordneten Bauteile begrenzen. Jedoch ist ebenfalls eine Wellenausbildung sowohl auf der Außenseite als auch auf der Innenseite des Mantelabschnittes möglich.

Um ein wirtschaftliches Herstellungsverfahren der Glockennabe zu schaffen, wird vorgeschlagen, dass die Glockennabe aus einem Gusswerkstoff hergestellt ist und dass der Mantelabschnitt der Glockennabe Gusschrägen aufweist, um im Gießprozess eine Entformbarkeit der Glockennabe zu schaffen. Mit der Herstellung der Glockennabe aus einem Gusswerkstoff kann auf ein wirtschaftliches Gießverfahren zugegriffen werden, wobei ein Sphäroguss bevorzugt anwendbar ist. Insbesondere bezüglich der hohen Torsionsbelastung der Glockennabe lassen die Festigkeitskennwerte für Gusseisen mit Kugelgraphit (GGG) eine im Vergleich zu einem Grauguss (GG) mit eingeschlossenem Lamellengraphit dünnere Wandstärke zu. Um im Gießverfahren die Glockennabe aus einer Dauerform entnehmen zu können, kann eine Gussschräge vorgesehen werden. Diese äußert sich in einer vom Deckelabschnitt zum Flanschabschnitt hin abnehmenden Wanddicke im Mantelabschnitt. Damit weist der Mantelabschnitt angrenzend an den Deckelabschnitt eine größere Wanddicke auf als im Bereich des Flanschabschnittes, wobei die Gussschräge in Bezug auf die Längsrichtung der Glockennabe sowohl außenseitig als auch innenseitig vorgesehen werden kann.

Bei Vorsehen eines schräg verzahnten Planetengetriebes weist der Deckelabschnitt zusätzlich eine Lageröffnung zur Aufnahme einer Lagerung für das Sonnenrad auf. Diese Axiallagerung ist in diesem Fall erforderlich um die aufgrund der Schrägverzahnung auftretenden Kräfte in axialer Richtung aufnehmen zu können. Bei Vorsehen eines geradverzahnten Planetengetriebes ist eine zusätzliche Axiallagerung des Sonnenrades dagegen nicht erforderlich.

Weiterhin verfügt der Deckelabschnitt über Befestigungsbohrungen für die Aufnahme der Planetenbolzen sowie Montagebohrungen für die Aufnahme eines Nabendeckels. Die Lageröffnung im Deckelabschnitt kann zur Aufnahme eines Wälzlagers vorgesehen werden, um eine durch eine Schrägverzahnung in das Sonnenrad eingeleite Axialkraft abzustützen, wobei ein Nabendeckel über Montagebohrungen zur Kapselung der innenliegenden Bauteile am Deckelabschnitt befestigt wird. Die Planetenbolzen sind ebenfalls im Deckelabschnitt der Glockennabe sowie im Planetenträger befestigt und übertragen das Antriebsmoment auf die Glockennabe und damit auf die Radnabe. Alle Bohrungen können dabei entweder ausschließlich über einen Bohrvorgang im Deckelabschnitt hergestellt werden oder bereits in der Gussform vorhanden sein und entsprechend angegossen werden, wobei gegebenenfalls eine spanende Nachbearbeitung vorgenommen werden kann. Der Deckelabschnitt der Glockennabe weist eine größere Wanddicke auf als der Mantelabschnitt, um eine hinreichende Festigkeit der im Deckelabschnitt befestigten Komponenten zu schaffen, wobei insbesondere die Planetenbolzen zur Drehmomentübertragung auf einer großen Länge im Deckelabschnitt gefasst sein müssen.

Eine weitere die Erfindung verbessernde Maßnahme sieht vor, dass der Mantelabschnitt in einen endseitig und dem Deckelabschnitt gegenüberliegend angeordneten Flanschabschnitt übergeht, wobei der Flanschabschnitt Befestigungsöffnungen für die Befestigung der Radnabe aufweist. Der Flanschabschnitt dient daher zur Anbindung der Radnabe an die Glockennabe, und bietet Befestigungsöffnungen für eine Verschraubung. Dabei können die Befestigungsöffnungen Durchgangsbohrungen oder Gewindebohrungen umfassen. An der Radnabe werd mit Hilfe von Radbolzen, die durch die vorgenannten Durchgangsöffnungen geführt werden, sowohl die Glockennabe wie auch die Bremstrommel sowie das Fahrzeugrad. Neben den Bohrungen für die Radbolzen sind weitere Durchgangsbohrungen zur Aufnahme von Befestigungsschrauben vorgesehen, mit denen die Glockennabe zur Gewährleistung einer einfacheren Montage zunächst an der Radnabe befestigt wird. Vorteilhafterweise ist die Flanschverschraubung derart angeordnet, dass diese in der normalen Rollphase des Nutzfahrzeugs im Wesentlichen eine Druckbelastung in Richtung der Raddrucklinie erfährt, und keine Momente über die Flanschverschraubung weitergegeben werden müssen.

Nachfolgend wird eine vorteilhafte Ausführungsform der vorliegenden Erfindung zusammen mit der Beschreibung der Figuren näher dargestellt. Es zeigt:
- Fig. 1: einen Querschnitt einer Außenplanetenachse im Beriech eines Außenplanetengetriebes mit einer Glockennabe im eingebauten Zustand;
- Fig. 2: eine perspektivische Ansicht einer Glockennabe mit einer Wellenform auf der Innenseite des Mantelabschnittes; und
- Fig. 3: eine Ansicht der Glockennabe aus Fig. 2, dargestellt mit Blickrichtung aus Richtung des Flanschabschnittes.

Bei den Figuren handelt es sich lediglich um beispielhafte schematische Darstellungen.

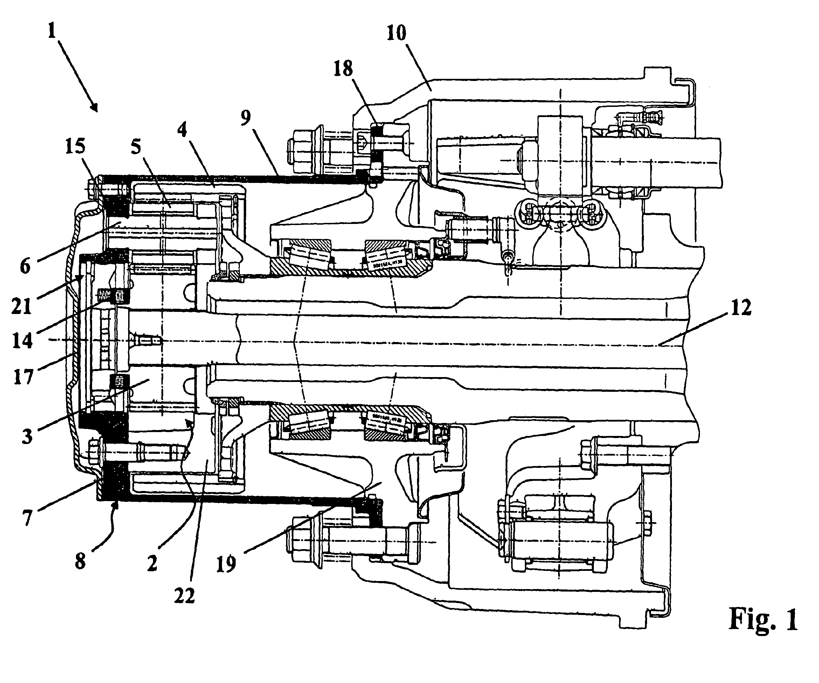

In Fig. 1 ist der Querschnitt einer Außenplanetenachse 1 im Bereich eines Planetengetriebes 2 gezeigt. Das Planetengetriebe 2 umfasst ein Sonnenrad 3, welches über eine mittig angeordnete Hinterachswelle 12 vom Antrieb des Nutzfahrzeugs angetrieben ist. Zwischen dem Sonnenrad 3 und einem Hohlrad 4 sind mehrere, insbesondere vier Planetenräder 5 angeordnet, welche auf Planetenbolzen 6 gelagert sind. Die Planetenbolzen 6 sind mit dem Deckelabschnitt 7 der Glockennabe 8 und dem Planetenträger 22 verbunden, sodass die Drehbewegung der Planetenräder 5, welche eine Rotationsbewegung um das Sonnenrad 3 ausführen, auf die Glockennabe 8 übertragen werden kann. Der Deckelabschnitt 7 der Glockennabe 8 geht in einen topfförmig angeformten Mantelabschnitt 9 über, welcher die Radnabe 19 mittels eines Flanschabschnittes 18 verbindet, der endseitig an den Mantelabschnitt 9 der Glockennabe 8 angeformt ist. Das Antriebsmoment bzw. die Drehbewegung des mit der Radnabe 19 und mit der Bremstrommel 10 verbundenen Fahrzeugrades (nicht dargestellt) wird über eine Torsion in der Glockennabe 10 vom Planetengetriebe 2 über den Deckelabschnitt 7, den Mantelabschnitt 9 und schließlich in den Flanschabschnitt 18 übertragen, welcher mit der Radnabe 19 über eine Schraubenverbindung und Radbolzen verbunden ist. Die Lagerung der Radnabe 19 erfolgt über eine mittels einer bei dieser Ausführungsform als Kegelrollenlager ausgeführten Lagerung 20. Alle im Kraftfluss liegenden Komponenten sind in Bezug auf ihre Symmetrieachse parallel zur Mittenachse der Hinterachswelle 12 der Außenplanetenachse 1 angeordnet.

Das Planetengetriebe 2 setzt die Drehzahl der über ein Ausgleichsgetriebe (nicht dargestellt) in der Mitte der Außenplanetenachse 1 motorseitig angetriebenen Hinterachswelle 12 auf die Radnabe 19 herab, sodass über die Glockennabe ein entsprechend hohes Drehmoment übertragen wird, was sich in einer Torsionsbelastung in der Glockennabe 8 und insbesondere im Mantelabschnitt 9 äußert. Neben der Funktion der Momentübertragung erfüllt die Glockennabe 8 eine Gehäusefunktion, wobei das Gehäuse mittig im Rad des Fahrzeugs angeordnet ist. Zur vollständigen Abdichtung der als Gehäuse des innenliegenden Planetengetriebes 2 wirkenden Glockennabe 8 dient ein Nabendeckel 17. In der Lageröffnung 21 ist eine als Axiallager ausgeführte Lagerung 14 angeordnet, welche das Sonnenrad 3 axial abstützt, denn durch die bei dieser speziellen Ausführungsform gewählten Schrägverzahnung des Planetengetriebes 2 entsteht im Sonnenrad 3 eine Axialkraftkomponente in Längsrichtung 12.

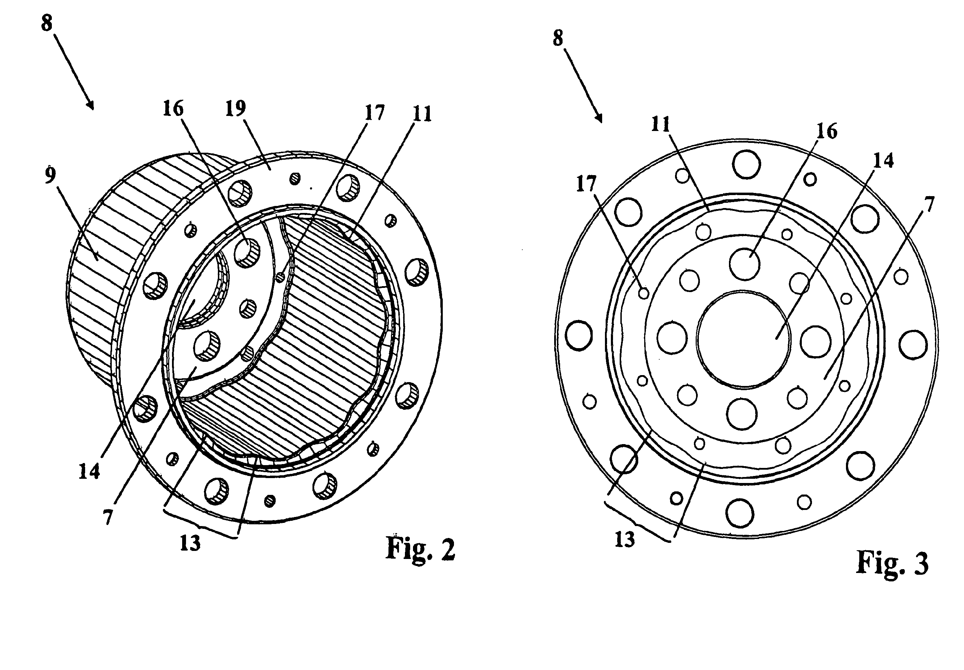

In Fig. 2 und Fig. 3 ist eine Glockennabe 8 perspektivisch und in einer zweidimensionalen Ansicht dargestellt, wobei insbesondere die Wellenform 11 auf der Innenseite der Glockennabe 8 gezeigt ist. Die Wellenform 11 ist als Wellenkontur in Umfangsrichtung im Mantelabschnitt 9 der Glockennabe 8 innenliegend ausgebildet, um im Betrieb der Außenplanetenachse 1 eine Geräuschentwicklung im Körper der Glockennabe 8 zu reduzieren bzw. zu vermeiden. Die Wellenformen 11 verhindern die Entstehung von Schwingungsfeldern, welche insbesondere durch das innenliegend in der Glockennabe 8 angeordnete Planetengetriebe 2 verursacht werden. Die Wellenform 11 unterteilt sich auf dem Umfang in zwölf Wellenabschnitte 13, welche jeweils aus einem Wellenberg und einem Wellental bestehen, wobei die Wellenform 11 geeigneterweise sinusförmig ist. Selbstverständlich ist auch eine andere Weiienform bzw. Anzahl von Wellen denkbar. In Richtung der Mittenachse der Hinterachswelle 12 und somit in Längsrichtung der Glockennabe 8 ist das Querschnittsprofil der Glockennabe 8 gleichförmig, d.h. die Wellenform 11 erstreckt sich innenliegend im Mantelabschnitt 9 von der Seite des Deckelabschnittes 7 bis zum Flanschabschnitt 18. In der Mitte der Glockennabe 8 ist eine Lageröffnung 21 zur Aufnahme einer Lagerung (nicht dargestellt) im Deckelabschnitt 7 angeordnet, weitere Öffnungen im Deckelabschnitt 7 sind die Bohrungen 15 zur Aufnahme der Planetenbolzen, welche insbesondere für vier Planetenräder 5 bzw. vier Planetenbolzen 6 jeweils versetzt angeordnet sind. Außenseitig sind Montagebohrungen 16 zur Aufnahme des Nabendeckels vorgesehen. Der Flanschabschnitt 18 der Glockennabe 8 weist Durchgangsbohrungen für Schraubenbolzen auf, welche die Glockennabe 8 bzw. das Rad mit der Radnabe 19 verbinden. Auf der Innenseite der Glockennabe 8 weist diese eine auf der Höhe des Flanschabschnittes 18 angebrachte Nut auf, um die Glockennabe 8 über eine Passung an der Radnabe zu befestigen. Damit endet die Wellenform 11 in der Innenseite des Matelabschnittes 9 vor der Nut. Alle Funktionsflächen, insbesondere die an weitere Komponenten angrenzenden Planflächen der Glockennabe 8 sind nach dem Gießprozess spanend nachbearbeitet.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- 1: Außenplanetenachse
- 2: Planetengetriebe
- 3: Sonnenrad
- 4: Hohlrad
- 5: Planetenrad
- 6: Planetenbolzen
- 7: Deckelabschnitt der Glockennabe
- 8: Glockennabe
- 9: Mantelabschnitt der Glockennabe
- 10: Bremstrommel
- 11: Wellenform
- 12: Hinterachswelle
- 13: Wellenabschnitt
- 14: Lagerung
- 15: Bohrung zur Aufnahme der Planetenbolzen
- 16: Montagebohrung
- 17: Nabendeckel
- 18: Flanschabschnitt
- 19: Radnabe
- 20: Lagerung der Radnabe
- 21: Lageröffnung
- 22: Planetenträger

## Patentansprüche

1. Außenplanetenachse (1) für ein Kraftfahrzeug mit außenseitig angeordneten Planetengetrieben (2), welche zumindest ein angetriebenes Sonnenrad (3) und in einem Hohlrad (4) umlaufende Planetenräder (5) aufweisen, wobei Planetenbolzen (6) zur Lagerung der Planetenräder (5) mit einem Deckelabschnitt (7) einer Glockennabe (8) verbunden sind, und wobei sich die Glockennabe (8) vom Deckelabschnitt (7) topfförmig in einen Mantelabschnitt (9) erstreckt, welcher endseitig mit einer Radnabe (19) verbunden ist, **dadurch gekennzeichnet, dass** die Glockennabe (8) im Mantelabschnitt (9) eine in Umfangsrichtung variierende Wanddicke aufweist, um Schwingungen im Mantelabschnitt (9) zu dämpfen.

2. Außenplanetenachse (1) nach Anspruch 1, **dadurch gekennzeichnet, dass** der Mantelabschnitt (9) der Glockennabe (8) eine gleichförmige und im Wesentlichen zylindrische Außenseite aufweist und die variierende Wanddicke als Wellenform (11) in der Innenseite der Glockennabe (8) ausgebildet ist.

3. Außenplanetenachse (1) nach Anspruch 1, **dadurch gekennzeichnet, dass** der Mantelabschnitt (9) der Glockennabe (8) eine gleichförmige und im Wesentlichen zylindrische Innenseite aufweist und die variierende Wanddicke als Wellenform (11) auf der Außenseite der Glockennabe (8) ausgebildet ist.

4. Außenplanetenachse (1) nach Anspruch 2 oder 3, **dadurch gekennzeichnet, dass** die Wellenform (11) im Wesentlichen gleichförmig in Richtung einer Mittenachse einer Hinterachswelle 12, also in Längsrichtung der Außenplanetenachse (1) quer zur Fahrtrichtung ausgebildet ist, sodass der Mantelabschnitt (9) ein in der Längsrichtung der Außenplanetenachse (1) gleich bleibendes Querschnittsprofil aufweist.

5. Außenplanetenachse (1) nach Anspruch einem der Ansprüche 1 bis 4, **dadurch gekennzeichnet, dass** der Mantelabschnitt (9) der Glockennabe (8) über dem Umfang ≥ 6 und ≤ 25, bevorzugt ≥ 10 und ≤ 15 und besonders bevorzugt 12 Wellenabschnitte (13) aufweist.

6. Außenplanetenachse (1) nach zumindest einem der vorgenannten Ansprüche, **dadurch gekennzeichnet, dass** die Wellenform (11) auf der Innenseite des Mantelabschnittes (9) sinusförmig ausgebildet ist.

7. Außenplanetenachse (1) nach zumindest einem der vorgenannten Ansprüche, **dadurch gekennzeichnet, dass** die Wanddicke des Mantelabschnittes (9) einen minimalen Wert von 5 mm und einen maximalen Wert von 8,5 mm aufweist.

8. Außenplanetenachse (1) nach zumindest einem der vorgenannten Ansprüche, **dadurch gekennzeichnet, dass** die Glockennabe (8) aus einem Gusswerkstoff hergestellt ist.

9. Außenplanetenachse (1) nach Anspruch 8, **dadurch gekennzeichnet, dass** der Mantelabschnitt (9) der Glockennabe (8) Gusschrägen aufweist, um im Gießprozess eine Entformbarkeit der Glockennabe (8) zu schaffen.

10. Außenplanetenachse (1) nach zumindest einem der vorgenannten Ansprüche, **dadurch gekennzeichnet, dass** der Deckelabschnitt (7) eine Lageröffnung (21) zur Aufnahme einer Lagerung (14) für das Sonnenrad (3), Befestigungsbohrungen (15) für die Aufnahme der Planetenbolzen (6) sowie Montagebohrungen (16) für die Aufnahme eines Nabendeckels (18) aufweist.

11. Außenplanetenachse (1) nach zumindest einem der vorgenannten Ansprüche, **dadurch gekennzeichnet, dass** der Mantelabschnitt (9) in einen endseitig und dem Deckelabschnitt (7) gegenüberliegend angeordneten Flanschabschnitt (19) übergeht, wobei der Flanschabschnitt (19) Befestigungsöffnungen für die Befestigung der Radnabe (10) aufweist.

## Claims

1. Planetary axle (1) for a motor vehicle with planetary gearsets (2) arranged at its ends, which gearsets feature at least one driven sun wheel (3) and planet gears (5) running in an internally toothed gear (4), whereby planet gear pins (6) bearing the planet gears (5) are connected to an end cover section (7) of a bell hub (8) and whereby the bell hub (8) extends like a bowl from the end cover section (7) into a jacket section (9), the end of which jacket section (9) is attached to a wheel hub (19), **characterised in that** the jacket section (9) of the bell hub (8) features a wall thickness which varies in circumferential direction in order to attenuate vibrations in the jacket section (9).

2. Planetary axle (1) as in Claim 1, **characterised in that** the jacket section (9) of the bell hub (8) features a uniform and essentially cylindrical exterior side and that the varying wall thickness is realised in an undulating form (11) of the interior side of the bell hub (8).

3. Planetary axle (1) as in Claim 1, **characterised in that** the jacket section (9) of the bell hub (8) features a uniform and essentially cylindrical interior side and that the varying wall thickness is realised in an undulating form (11) of the exterior side of the bell hub (8).

4. Planetary axle (1) as in Claim 2 or 3, **characterised in that** the undulating form (11) is realised essentially uniformly towards a centre axis of a rear axle shaft (12), i.e. in the longitudinal extension of the planetary axle (1) at right angles to the direction of motion, so that the jacket section (9) features a cross-sectional profile that is constant in its longitudinal extension over the planetary axle (1).

5. Planetary axle (1) as in one of the Claims 1 to 4, **characterised in that** the jacket section (9) of the bell hub (8) has ≥ 6 and ≤ 25, preferably ≥ 10 and ≤ 15 and most preferably 12 undulating sections (13) over its circumference.

6. Planetary axle (1) as in at least one of the foregoing Claims, **characterised in that** the undulating form (11) on the inside of the jacket section (9) is made up of sinusoidal curves.

7. Planetary axle (1) as in at least one of the foregoing Claims, **characterised in that** the wall of the jacket section (9) is at least 5 mm and at most 8.5 mm thick.

8. Planetary axle (1) as in at least one of the foregoing Claims, **characterised in that** the bell hub (8) is made of a cast material.

9. Planetary axle (1) as in Claim 8, **characterised in that** the jacket section (9) of the bell hub (8) features chamfers to permit removal of the bell hub (8) from its mould during the casting process.

10. Planetary axle (1) as in at least one of the foregoing Claims, **characterised in that** the end cover section (7) features a bearing orifice (21) to hold a bearing (14) for the sun wheel (3), mounting bores (15) to hold the planet gear pins (6) and bores (16) for holding a hub cover (18).

11. Planetary axle (1) as in at least one of the foregoing Claims, **characterised in that** the jacket section (9) merges at its inner end into a flange section (19) facing the end cover section (7), whereby the flange section (19) features orifices for mounting the wheel hub (10).

## Revendications

1. Essieu à réducteurs planétaires (1) pour un véhicule à moteur avec des trains planétaires (2) disposés du côté extérieur, lesquels présentent au moins un planétaire (3) entraîné et des satellites (5) tournant dans une couronne (4), auquel cas les axes de planétaires (6) sont reliés à un élément de recouvrement (7) d'un moyeu à cloche (8) pour recevoir les satellites (5) et auquel cas le moyeu à cloche (8) s'étend de l'élément de recouvrement (7) en forme de pot dans une partie cylindrique (9), lequel est relié à son extrémité à un moyeu de roue (19), **caractérisé en ce que** le moyeu à cloche (8) présente une épaisseur de paroi variable dans le sens de la circonférence dans la partie cylindrique (9) pour réduire les vibrations dans la partie cylindrique (9).

2. Essieu à réducteurs planétaires (1) selon la revendication 1, **caractérisé en ce que** la partie cylindrique (9) du moyeu à cloche (8) présente une face intérieure de même forme et pour l'essentiel cylindre, et l'épaisseur de paroi variable est formée comme profil ondulé (11) sur la face intérieure du moyeu à cloche (8).

3. Essieu à réducteurs planétaires (1) selon la revendication 1, **caractérisé en ce que** la partie cylindrique (9) du moyeu à cloche (8) présente une face intérieure de même forme et pour l'essentiel cylindre, et l'épaisseur de paroi variable est formée comme profil ondulé (11) sur la face extérieure du moyeu à cloche (8).

4. Essieu à réducteurs planétaires (1) selon la revendication 2 ou 3, **caractérisé en ce que** le profil ondulé (11) est formé pour l'essentiel de forme identique dans le sens d'un axe médian d'un arbre de pont arrière (12), donc dans le sens longitudinal de l'essieu à réducteurs planétaires (1) de manière transversale par rapport au sens de la marche de telle manière que la partie cylindrique (9) présente un profilé de section transversale identique dans le sens longitudinal de l'essieu à réducteurs planétaires (1).

5. Essieu à réducteurs planétaires (1) selon l'une des revendications 1 à 4, **caractérisé en ce que** la partie cylindrique (9) du moyeu à cloche (8) présente ≥ 6 et ≤ 25, de préférence ≥ 10 et ≤ 15 et particulièrement 12 parties ondulées (13) sur toute la circonférence.

6. Essieu à réducteurs planétaires (1) selon au moins une des revendications mentionnées précédemment, **caractérisé en ce que** le profil ondulé (11) est formé de manière sinusoïdale sur la face intérieure de la partie cylindrique (9).

7. Essieu à réducteurs planétaires (1) selon au moins une des revendications mentionnées précédemment, **caractérisé en ce que** l'épaisseur de paroi de la partie cylindrique (9) présente une valeur minimale de 5 mm et une valeur maximale de 8,5 mm.

8. Essieu à réducteurs planétaires (1) selon au moins une des revendications mentionnées précédemment, **caractérisé en ce que** le moyeu à cloche (8) est fabriqué en matériau de moulage.

9. Essieu à réducteurs planétaires (1) selon la revendication 8, **caractérisé en ce que** la partie cylindrique (9) du moyeu à cloche (8) présente des chanfreins en fonte pour créer une résistance à la déformation du moyeu à cloche (8) pendant le processus de coulée.

10. Essieu à réducteurs planétaires (1) selon au moins une des revendications mentionnées précédemment, **caractérisé en ce que** l'élément de recouvrement (7) présente une orifice de fixation (21) pour recevoir un roulement de roue (14) destiné au planétaire (3), des alésages de fixation (15) pour recevoir les axes de planétaires (6) ainsi que des alésages de montage (16) pour recevoir un cache de moyeu (18).

11. Essieu à réducteurs planétaires (1) selon au moins une des revendications mentionnées précédemment, **caractérisé en ce que** la partie cylindrique (9) dépasse dans une partie à collerette (19) disposée à l'extrémité et de manière opposée à l'élément de recouvrement (7), auquel cas la partie à collerette (19) présente des orifices de fixation pour fixer le moyeu de roue (10).
